(19) **Europäisches Patentamt / European Patent Office / Office européen des brevets**

(11) **EP 1 866 833 B1**

(12) # EUROPÄISCHE PATENTSCHRIFT

(45) Veröffentlichungstag und Bekanntmachung des Hinweises auf die Patenterteilung:
**21.03.2012 Patentblatt 2012/12**

(21) Anmeldenummer: **06723867.5**

(22) Anmeldetag: **30.03.2006**

(51) Int Cl.:
**G06K 9/00** *(2006.01)*

(86) Internationale Anmeldenummer:
**PCT/EP2006/002901**

(87) Internationale Veröffentlichungsnummer:
**WO 2006/103070 (05.10.2006 Gazette 2006/40)**

(54) **VERIFIZIEREN VON FINGERABDRÜCKEN**

VERIFICATION OF FINGERPRINTS

VERIFICATION D'EMPREINTES DIGITALES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.03.2005 DE 102005015180**

(43) Veröffentlichungstag der Anmeldung:
**19.12.2007 Patentblatt 2007/51**

(73) Patentinhaber: **Giesecke & Devrient GmbH 81677 München (DE)**

(72) Erfinder:
- **MÜLLER, Robert 85521 Riemerling (DE)**
- **SCHAAL, Alexander 81739 München (DE)**
- **BARTSCH, Armin 82194 Gröbenzell (DE)**
- **STEPHAN, Elmar 80339 München (DE)**

(56) Entgegenhaltungen:
**US-A1- 2003 044 052**

- **HO YOUNG LEE ET AL: "A new approach to random walk matching of fingerprint recognition" INTELLIGENT SIGNAL PROCESSING AND COMMUNICATION SYSTEMS, 2004. ISPACS 2004. PROCEEDINGS OF 2004 INTERNATIONAL SYMPOSIUM ON SEOUL, KOREA NOV. 18-19, 2004, PISCATAWAY, NJ, USA,IEEE, 18. November 2004 (2004-11-18), Seiten 39-42, XP010805968 ISBN: 0-7803-8639-6**
- **KOVACS-VAJNA Z M: "A FINGERPRINT VERIFICATION SYSTEM BASED ON TRIANGULAR MATCHING AND DYNAMIC TIME WARPING" IEEE TRANSACTIONS ON PATTERN ANALYSIS AND MACHINE INTELLIGENCE, IEEE SERVICE CENTER, LOS ALAMITOS, CA, US, Bd. 22, Nr. 11, November 2000 (2000-11), Seiten 1266-1276, XP001102786 ISSN: 0162-8828**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft Verfahren, eine Chipkarte, ein System und ein Compterprogrammprodukt zum Verifizieren eines Fingerabdrucks einer Person.

Das Überprüfen der Identität oder einer Zugangsberechtigung einer Person wird heutzutage vielfach anhand von schwer zu fälschenden biometrischen Merkmalen der Person durchgeführt. Hierzu wird zumindest ein geeignetes biometrisches Merkmal der Person, z. B. ein Fingerabdruck, ein Irismuster, etc., zunächst in einem Registrierungsschritt als Referenz ermittelt und zum späteren Vergleich mit entsprechenden Vergleichsdaten der Person gespeichert.

Aus Sicherheits- und Praktikabilitätsgründen ist es hierbei zweckmäßig, die Referenzdaten auf einem von der Person mitzuführenden portablen Datenträger, zum Beispiel einer Chipkarte oder einer Smart-Card zu speichern. Zur Verifikation ihrer Identität tritt die Person mit dem portablen Datenträger an eine Verifikationsvorrichtung, die die entsprechenden biometrischen Vergleichsdaten zum Vergleich mit den auf dem Datenträger gespeicherten Referenzdaten ermittelt. Der eigentliche Vergleich kann dann sowohl von der Vorrichtung als auch, falls der Datenträger über Rechenleistung verfügt, von dem Datenträger selbst durchgeführt werden. Beim Einsatz einer Chipkarte mit Prozessor besitzt der letztere Fall, das so genannte On-Card-Matching, sicherheitstechnische Vorteile, da bei einem Vergleich auf der Chipkarte die sensiblen Referenzdaten in einem besonders gesicherten Speicher der Chipkarte verbleiben.

Da gegenwärtige Systeme zum On-Card-Matching meist proprietäre Datenformate verwenden, werden zur besseren Interoperabilität zunehmend standardisierte Datenformate definiert und eingesetzt. Gegenüber den technisch und algorithmisch optimierten proprietären Datenformaten haben standardisierte Datenformate jedoch meist den Nachteil, dass der Vergleich von biometrischen Merkmalen einer Person auf der Chipkarte nur mit teilweise wesentlich längerer Ausführungszeit möglich ist. Hierbei kommt insbesondere zum Tragen, dass herkömmliche Vergleichsverfahren zumeist iterativ und insofern besonders zeitaufwendig vorgehen.

Ein besonders geeignetes biometrisches Merkmal zur Identitätsüberprüfung ist der Fingerabdruck einer Person. Da diese komplexe Information jedoch nicht als solches zum Vergleich herangezogen werden kann, werden zunächst bestimmte charakteristische Merkmale des Fingerabdrucks - so genannte "Minutien" - extrahiert, die die charakteristischen Linienverläufe der Rillenstruktur eines Fingerabdrucks beschreiben, wie z.B. Linienenden oder Aufspaltungen (Bifukationen).

Zur Verifikation der Identität einer Person wird ein Vergleichsfingerabdruck der Person mit einem Referenzfingerabdruck verglichen, indem aus dem Vergleichsfingerabdruck Vergleichsminutien extrahiert werden, um diese mit zuvor aus einem Referenzfingerabdruck extrahierten und auf der Chipkarte vorliegenden Referenzminutien zu vergleichen. Dabei werden möglichst viele Minutienpaare, bestehend aus einander entsprechenden Referenz- und Vergleichsminutien, anhand von örtlich-geometrischen Kriterien ermittelt und bewertet. Das Ermitteln von Minutienpaaren lässt sich prinzipiell in zwei Stufen einteilen: dem Ermitteln eines aus zwei Minutienpaaren bestehenden Baselinepaars und, ausgehend von dem Baselinepaar, dem Ermitteln von möglichst vielen weiteren Minutienpaaren. Das Baselinepaar wird dabei anhand von absoluten Kriterien ermittelt (z.B. übereinstimmende Lage, Position oder lokale Eigenschaften der Minutien in den jeweiligen Fingerabdrücken), während die weiteren Minutienpaare abhängig von dem bereits ermittelten Baselinepaar bzw. relativ zu diesem ermittelt werden.

Dieses Vorgehen erfordert jedoch zumeist ineinander geschachtelte (iterative oder rekursive) Berechnungsvorgänge, um möglichst viele Minutienpaare zu finden und eine hohe Zuverlässigkeit des Ergebnisses garantieren zu können. Bei derartigen Optimierungsverfahren sind zumeist auch besonders aufwendige Korrekturoperationen notwendig, da sich bereits gefundene Minutienpaare oftmals als lokale Optima erweisen und verworfen werden müssen, um durch eine revidierte Neuberechnung eine bessere Lösung und eine höhere Zuverlässigkeit zu erreichen.

In der US 2003/0044052 A1 wir ein Verfahren zum Vergleichen von Fingerabdrücken beschrieben. In diesem Verfahren wird zunächst ein Koordinatenursprung in das Referenzbild und in das Vergleichsbild des Fingerabdrucks gelegt und jede Minutie anhand des Koordinatensystems sortiert. Anschließend wird ein Baselinepaar, bestehend aus 2 Minutienpaaren, im Referenzbild und im Vergleichsbild gesucht. Ist ein übereinstimmendes Baselinepaar gefunden wird im Referenzbild die nächste Minutie ausgehend von dem zuletzt übereinstimmenden Minutienpaar gesucht. Das dadurch entstehende neue Segment wird mit einem potentiellen Segment im Vergleichsbild verglichen. Der Fingerabdruck ist verifiziert, wenn eine bestimmte Anzahl von übereinstimmenden Segmenten im Referenzbild und Vergleichsbild gefunden worden sind. Das Finden neuer Segmente wird ausschließlich auf Basis des zuletzt gefundene Minutienpaar durchgeführt, sodass eine hohe Wahrscheinlichkeit besteht eine falsche nächste Minutie im Vergleichsbild aufgrund bestehender Toleranzgrenzen auszuwählen. Dadurch verlangsamt sich das Vergleichsverfahren enorm.

Demzufolge liegt der vorliegenden Erfindung die Aufgabe zugrunde, eine schnelle aber dennoch zuverlässige und sichere Verifikation von Fingerabdrücken bereitzustellen.

Diese Aufgabe wird erfindungsgemäß durch ein Verfahren, eine Chipkarte, ein System und ein Comouterprogrammprodukt mit den Merkmalen der unabhängigen Ansprüche 1, 19, 37, and 38 gelöst. In davon abhängigen Ansprüchen sind vorteilhafte Ausgestaltungen und Weiterbildungen der Erfindung angegeben.

Beim Vergleichen von Vergleichs- und Referenzminutien wird erfindungsgemäß aus allen bereits ermittelten Minutienpaaren einschließlich der beiden Minutienpaare des Baselinepaars eine Kette definiert, die eine im weiteren Verlauf des Verfahrens unveränderliche Reihenfolge der Minutienpaare festlegt und die um jedes weitere ermittelte Minutienpaar verlängert wird. Jedes Minutienpaar wird dann anhand von geometrischen Beziehungen bzw. Relationen der betrachteten Minutien zu den Minutien von zumindest drei bereits ermittelten, durch ihre Position innerhalb der Kette bestimmten Bezugsminutienpaaren bestimmt.

Als Bezugsminutienpaare werden die Minutienpaare an bestimmten Positionen innerhalb der Kette der bereits ermittelten Minutienpaare vorgegeben, so dass ein neues Minutienpaar im Verhältnis zu diesen drei bereits ermittelten Minutienpaaren verifiziert wird. Dazu werden bestimmte Relationen einer ausgewählten Referenzminutie eines potentiellen weiteren Minutienpaars zu den Referenzminutien der drei Bezugsminutienpaare berechnet und mit den Werten der gleichen Relationen einer ausgewählten, potentiell mit der ausgewählten Referenzminutie korrespondierenden Vergleichsminutie zu den Vergleichsminutien der drei Bezugsminutienpaare verglichen. Falls alle ermittelten Werte der ausgewählten Vergleichsminutie innerhalb von bestimmten Toleranzbereichen der entsprechenden Werte der ausgewählten Referenzminutie liegen, wird angenommen, dass die ausgewählte Vergleichsminutie und die ausgewählte Referenzminutie einander entsprechen und ein Minutienpaar bilden, welches an die Kette als gegenwärtig letztes Glied angehängt wird.

Eine Person gilt beispielsweise dann als authentifiziert, wenn die Kette eine vorgegebene Mindestlänge erreicht, dass heißt, die Anzahl der ermittelten Minutienpaare einen vorgegebenen Schwellenwert überschreitet.

Im einfachsten Fall wird hierbei so vorgegangen, dass beim Ermitteln weiterer Minutienpaare zunächst eine Referenzminutie ausgewählt wird, die innerhalb einer bestimmten lokalen Umgebung in der Nähe der Referenzminutie des zuletzt ermittelten Minutienpaars liegt, und dass zur Überprüfung der Relationen Vergleichsminutien ausgewählt werden, die in dem gleichen örtlichen Bereich des Vergleichsfingerabdrucks liegen (also ähnliche Ortskoordinaten haben), wie die Referenzminutie im Referenzfingerabdruck. Dabei können zu einer Referenzminutie zunächst sämtliche Relationen berechnet werden, um in der Menge der Vergleichsminutien zu überprüfen, ob es zumindest eine Vergleichsminutie gibt, deren Relationswerte innerhalb der Toleranzbereiche der Relationswerte der Referenzminutie liegt. Falls es mehrere derartige Vergleichsminutien gibt, kann diejenige ausgewählt werden, deren Relationen zu denjenigen der ausgewählten Bezugsminutie die geringste Differenz besitzen.

Durch das Bilden der Kette aus allen bisher ermittelten Minutienpaaren und Bestimmen von drei Bezugsminutienpaaren innerhalb dieser Kette wird die Anzahl der notwendigen Vergleiche zwischen Vergleichs- und Referenzminutien im Hinblick auf herkömmliche Verfahren drastisch reduziert, was zu einer wesentlichen Beschleunigung des Verfahrens führt, da nur Vergleiche mit den drei Bezugsminutienpaaren durchgeführt werden müssen. Dabei wird die erforderliche Zuverlässigkeit und Exaktheit der Ergebnisse dadurch sichergestellt, dass neben solchen Werten, die lediglich lokale Eigenschaften einer Minutie darstellen (z.B. ihre Position im Fingerabdruck oder ihr Minutienwinkel), auch Relationen beurteilt werden, die eine insbesondere geometrische Beziehung einer ausgewählten Minutie zu den Minutien bereits ermittelter Minutienpaare herstellen.

Das beschriebene Verfahren kann durch eine erfindungsgemäß eingerichtete Chipkarte durchgeführt werden, die einen Prozessor und eine Speicheranordnung mit insbesondere einem nichtflüchtigen EEPROM-Speicher umfasst. Vorzugsweise realisiert ein als Softwareprogramm ausgestaltetes und auf der Chipkarte (entweder im EEPROM- oder ROM-Speicher) vorliegendes Biometriemodul das erfindungsgemäße Verfahren. Alternativ ist auch eine Hardwarelösung, z.B. in Form eines biometrischen Co-Prozessors denkbar. Die Chipkarte umfasst desweiteren einen bestimmten Speicherbereich bzw. einen separaten Speicher zum Speichern der Referenzminutien, wobei dieser Speichervorzugsweise besonderen Sicherheitsanforderungen genügt, um die Sicherheit der sensiblen biometrischen Daten sicherzustellen.

Beim Einsatz der Chipkarte bringt eine Person die Chipkarte mit einer Verifikationsvorrichtung (Terminal) in Kontakt und gibt dort über einen dafür vorgesehenen biometrischen Sensor einen Vergleichsfingerabdruck ab. Dieser wird über entsprechende Datenkommunikationsschnittstellen an die Chipkarte übertragen, wo der Fingerabdruck in einem dafür vorgesehenen Speicherbereich abgelegt wird und die Vergleichsminutien extrahiert werden.

Bei einer bevorzugten Ausführungsform werden als Bezugsminutienpaare die an erster, an vorletzter und an letzter Position der Kette befindliche Minutienpaare bestimmt. Das erste Minutienpaar der Kette ist dabei eines der beiden Minutienpaare des Baselinepaars, während das vorletzte und das letzte Minutienpaar der Kette die beiden zuletzt ermittelten Minutienpaare repräsentieren. Selbstverständlich könne auch andere oder mehr Bezugsminutienpaare anhand ihrer Position in der Kette bestimmt werden, z.B. alle Minutienpaare an geraden oder ungeraden Positionen der Kette.

Als bei der Entwicklung weiterer Minutienpaare zu beurteilende Relationen ist es insbesondere vorteilhaft, die Distanz der ausgewählten Referenz- bzw. Vergleichsminutie zu den jeweiligen Referenz- bzw. Vergleichsminutien der Bezugsminutienpaare zu ermitteln. Als weitere zu vergleichende Relationswerte können die Winkel ermittelt werden, die ein gedachter Linienzug von der ausgewählten Referenz- bzw. Vergleichsminutie zu der Referenz- bzw. Vergleichsminutie des letzten Minutienpaars und weiter zu der Referenz- bzw. Vergleichsminutie des vorletzten Minutienpaars einschließt. Selbstverständlich können zusätzlich oder alternativ auch andere derart mittels der Bezugsminutienpaare gebildete Winkel beurteilt werden.

Darüber hinaus kann als lokale Eigenschaft einer Minutie der Minutienwinkel einer ausgewählten Referenz- bzw. Vergleichminutie beurteit werden, der die Orientierung der von der Minutie in dem entsprechenden Fingerabdruck ausgehenden Rille in einen Bezugskoordinatensystem beschreibt.

Um die Ausführungsgeschwindigkeit des Verfahrens zu optimieren, ist es bei einer bevorzugten Ausführungsform möglich, als Vorauswahl zunächst die Minutienwinkel der ausgewählten Referenz- und Vergleichsminutien zu vergleichen, da dies die geringste Rechenzeit beansprucht. Nur falls die Minutienwinkel in dem vorgegebenen Toleranzbereich liegen, werden weitere Relationen berechnet, da die ausgewählten Minutien ansonsten ohnehin nicht miteinander korrespondieren.

Falls die Minutienwinkel im vorgegebenen Toleranzbereich liegen, können aufgrund einer Rechenzeitabschätzung als nächstes die Distanzen der ausgewählten Minutien zu den entsprechenden Minutien der Bezugsminutienpaare berechnet werden und erst als letztes, falls auch die Distanzen in den entsprechenden Toleranzbereichen liegen, die Winkel, die von den ausgewählten Minutien und den entsprechenden Minutien der Bezugsminutienpaare eingeschlossen werden, da dies die aufwendigste Berechnung erfordert.

Falls eine ausgewählte Vergleichsminutie mit einer ausgewählten Referenzminutie nicht korrespondiert, d.h. sie in den entsprechenden Referenz- und Vergleichsfingerabdrücken nicht übereinstimmen, wird die Ermittlung eines Minutienpaars mit der gleichen ausgewählten Referenzminutie, aber einer anderen Vergleichsminutie wiederholt, so lange bis es nach vorgegebenen Kriterien (z.B. eine maximale Anzahl von Versuchen) unwahrscheinlich erscheint, dass zu der ausgewählten Referenzminutie eine entsprechende Vergleichsminutie gefunden werden kann.

Im Hinblick auf einen möglichst effizienten Vergleich von Referenz- und Vergleichsminutien ist es sinnvoll, die Vergleichsminutien beim oder unmittelbar nach dem Extrahieren aus einem Vergleichsfingerabdruck anhand ihrer Minutienwinkel vorzusortieren bzw. in einem dafür vorgesehenen Speicherbereich der Chipkarte vorsortiert abzulegen, um möglichst schnell eine zu einer ausgewählten Referenzminutie passende Vergleichsminutie anhand ihres Minutienwinkels auswählen zu können. Zusätzlich kann es zweckmäßig sein, die Winkel, Distanzen, bzw. weiteren Relationen der Referenzminutien erst dann zu berechnen, wenn diese für die Ermittlung einer zugehörigen Vergleichsminutie benötigt werden. Solche bereits berechneten Winkel und Distanzen können dann für etwaige weitere Vergleiche mit anderen ausgewählten Vergleichsminutien in einer geeigneten Datenstruktur zusammen mit den zugehörigen Vergleichminutien in einem nichtflüchtigen (EEPROM) Speicher der Chipkarte gespeichert werden.

Bei einer besonders bevorzugten Ausführungsform wird die Reihenfolge, in der Referenzminutien beim Ermitteln von Minutienpaaren berücksichtigt werden bereits vor dem Vergleichen von Fingerabdrücken durch eine vorgegebenen Referenzminutien-Folge festgelegt. Dies kann bereits bei der Aufzeichnung des Referenzfingerabdrucks und der Extraktion der Referenzminutien erfolgen. In diesem Fall wird eine Referenzminutie bei dem eigentlichen Vergleich von Referenz- und Vergleichminutien nicht individuell abhängig von vorgegebenen Auswahlkriterien oder den vorher ermittelten Minutienpaaren ausgewählt, sondern es wird ein bestimmter Pfad der Referenzminutien durch den Referenzfingerabdruck festgelegt, der auch den gleichen Pfad der Vergleichsminutien durch den Vergleichsfingerabdruck bestimmt, so dass durch Einschränkung der Kombinationsmöglichkeiten eine weitere Beschleunigung des Verfahrens erreicht werden kann.

Hierbei ist es insbesondere möglich, dass falls zu einer bestimmten Referenzminutie keine passende Vergleichsminutie gefunden werden kann, das Ermitteln eines weiteren Minutienpaars mit der nächsten durch die Refernzminutien-Folge festgelegten Referenzminutie fortgesetzt wird. Da hierbei das Ermitteln weiterer Minutienpaare nicht mehr durch eine einzelne "schlechte" Vergleichsminutie blockiert wird, führt dies zu zuverlässigeren Vergleichsergebnissen, ohne dass die Geschwindigkeit des Verfahrens darunter leiden würde. Eine weitere Beschleunigung des Verfahrens bei keinerlei nachweisbaren Einbußen an Zuverlässigkeit kann erreicht werden, wenn nur Baselinepaare zugelassen werden, die in der vorgegebenen Referenzminutien-Folge unmittelbar aufeinander folgen.

Bei dieser besonders bevorzugten Ausführungsform der Erfindung ist es vorteilhaft, die Referenzminutien-Folge bereits beim Extrahieren der Referenzminutien aus einem Referenzfingerabdruck zu bilden. Dies kann anhand bestimmter vorgegebener Kriterien geschehen, die anhand einer Güte, Relevanz oder statistische Signifikanz oder anhand geometrischer Kriterien für die Referenzminutien festgelegt werden. Hierbei bietet es sich insbesondere an, die Referenzminutien nach ihren Minutienwinkeln, nach Abständen zu benachbarten Minutien, nach Lage der Minutie innerhalb des Fingerabdrucks (z.B. kann eine Minutie im Zentrum des Fingerabdrucks wichtiger sein als eine in der Peripherie) oder nach Konfidenzwerten zu gewichten, die bei der bildanalytischen Extraktion der Vergleichsminutien aus dem Vergleichsfingerabdruck berechnet werden.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:

Figur 1    Minutientypen in einem schematischen Fingerabdruckbild;

Figur 2     Kriterien zur Ermittlung eines Baselinepaars;

Figur 3     Kristerien zur Ermittlung weiterer Minutienpaare;

Figur 4     Überspringen einer Referenzminutie beim Ermitteln eines weiteren Minutienpaars;

Figur 5     ein Flussdiagramm einer Ketten-Match-Verfahrens gemäß der vorliegenden Erfindung;

Figur 6     ein Beispiel für das Bilden einer Kette bei einer bevorzugten Ausführungsform der Erfindung; und

Figur 7     eine erfindungsgemäße Chipkarte.

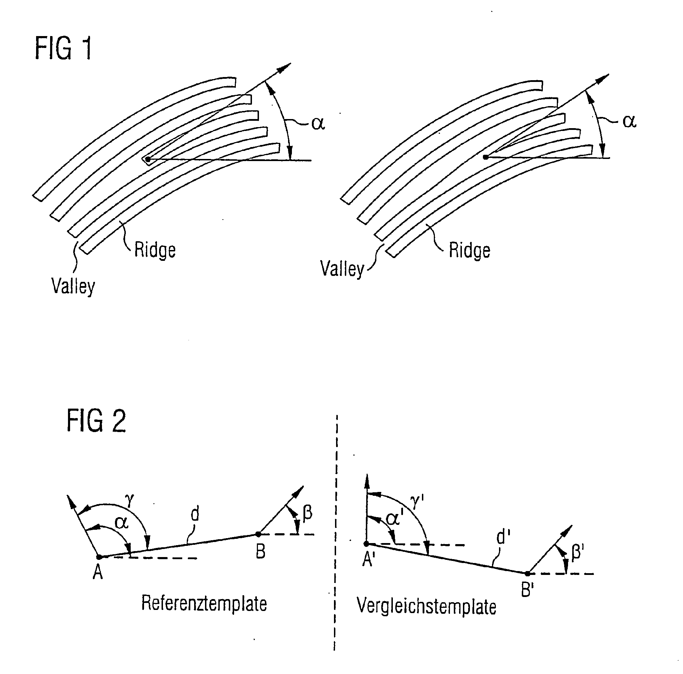

Figur 1 zeigt zwei schematische Ausschnitte aus den Rillenverläufen eines Fingerabdruckbilds. Die Rillen bilden dabei Minutien als charakteristische Punkte aus. Die beiden wichtigsten Minutientypen sind endende Rillen (Ridge Ending; links) und sich in zwei neue Rillen aufspaltenden Rillen (Ridge Bifucation; rechts). Obwohl bei zwei Abdrücken desselben Fingers bei derselben Minutie der Typ jeweils gleich sein sollte, bringt eine Überprüfung des Minutientyps im Allgemeinen keinen Vorteil und kann somit vernachlässigt werden.

Das erfindungsgemäße Verfahren ist im Prinzip ein Vergleichsalgorithmus (Matcher), der zunächst nach einem dem Referenz- und dem Vergleichstemplate gemeinsamen Startmerkmal sucht. (Ein Template ist der Datensatz der aus einem digitalisierten Fingerabdruckbild extrahierten Minutien.) Ausgehend von diesen Startminutien werden möglichst viele weitere einander entsprechenden Minutien gesucht. Es werden also grob zwei Schritte durchgeführt: eine Suche nach einem initialen Doppelpaar einander entsprechender Minutien (sog. Baselinepaar) und eine daran anschließende Suche nach dazu passenden Minutienpaaren. Sind genügend einander entsprechende Minutien gefunden (abhängig von der gewünschten Sicherheit), so kann mit einer gewissen Wahrscheinlichkeit angenommen werden, dass die Fingerabdrücke von demselben Finger stammen.

Im Sinne dieser Erfindung besteht eine Baseline aus zwei Minutien innerhalb eines Templates, von denen aus weitere Minutien gesucht, bzw. verglichen werden können. Sie dient als Basis für weitere Schritte. Ein Baselinepaar wird dementsprechend jeweils aus Minutien im Referenz- und Vergleichstemplate gebildet, die nach Berechnung verschiedener Parameter als übereinstimmend gelten. Ein Baselinepaar ist also ein Paar aus einander entsprechenden Baselines im Referenz- und im Vergleichstemplate.

Der Minutienvergleich wird mit einem Baselinepaar begonnen. Damit jeweils zwei Minutien aus dem Referenz- und Vergleichstemplate ein Baselinepaar ergeben können, müssen die in Figur 2 veranschaulichten Kriterien erfüllt sein. Es sind jeweils zwei Punkte aus den beiden Templates zu sehen. Zu den Referenzminutien A und B passen die Vergleichsminutien A' und B'. Algorithmisch wird zuerst eine Minutie A im Referenztemplate ausgewählt, eine entsprechende Minutie A' im Vergleichstemplate bestimmt ($\alpha' = \alpha \pm$ maximale Verdrehung der Abdrücke) und ein weiterer Punkt B gewählt. Um einen passenden Punkt B' zu finden, werden zunächst die Werte d, $\gamma$ und $\beta$-($\alpha$- $\alpha'$) vorberechnet. Nun werden alle möglichen Punkte im Vergleichstemplate herangezogen, die einem bestimmten Minutienwinkel besitzen ($\beta'= \beta$- ($\alpha$- $\alpha'$) $\pm$ Minutienwinkel-Toleranz). Schließlich werden d' und $\gamma$ berechnet, die innerhalb der Abstandstoleranz, bzw. der Toleranz der Minutienwinkel-x-Achse liegen müssen. Ist dies der Fall, ist ein Baselinepaar gefunden.

Für die Entscheidung, ob $\alpha'$ innerhalb der maximalen Verdrehung liegt, ist nur eine Addition notwenig (neben dem eigentlichen Vergleich). Ist die Toleranz z.B. n/4, so fallen schon 75 % der möglichen Baselinepaare weg. Die Werte d, $\gamma$ und $\beta$- ($\alpha$- $\alpha'$) werden vorberechnet, da sie bei der Suche nach B' immer wieder gebraucht werden. Weil die Minutien im Vergleichstemplate nach den Minutienwinkeln vorsortiert sind, werden nur wenige Minutien für B' betrachtet. Die Suche in der sortieren Liste startet bei der Minutie, deren $\beta'$ gerade groß genug ist, um innerhalb der Toleranz zu sein und endet bei der ersten Minutie, deren $\beta'$ zu groß ist. Zu diesem Zeitpunkt sind schon fast alle falschen Baselinepaar-Möglichkeiten herausgefallen, nun müssen nur noch d' und $\gamma$ berechnet und verglichen werden. Falls die Toleranz für $\beta'$ so klein ist, dass die Werte d' und $\gamma$ fast nie berechnet werden müssen, kann eine Variante benutzt werden, in der d, $\gamma$ erst bei Bedarf berechnet werden. Der Mehraufwand für die Bedarfsprüfung muss dann geringer sein, als die Ersparnis durch das häufige Nichtberechnen von d, $\gamma$.

Die Grundidee des erfindungsgemäßen Verfahrens ist das Ketten-Matching, also dem Suchen einer möglichst lange Kette von zueinander passenden Minutienpäaren. Dabei muss das jeweils nächste Paar zum ersten, zum vorletzten und zum letzten der bereits gefundenen Minutienpaare der Kette passen, also zu drei bereits gefundenen Minutienpaaren. Da die neuen Minutienpaare immer geometrisch zu den zuletzt gefundenen Paaren passen müssen, entsteht eine Kette von Minutienpaaren.

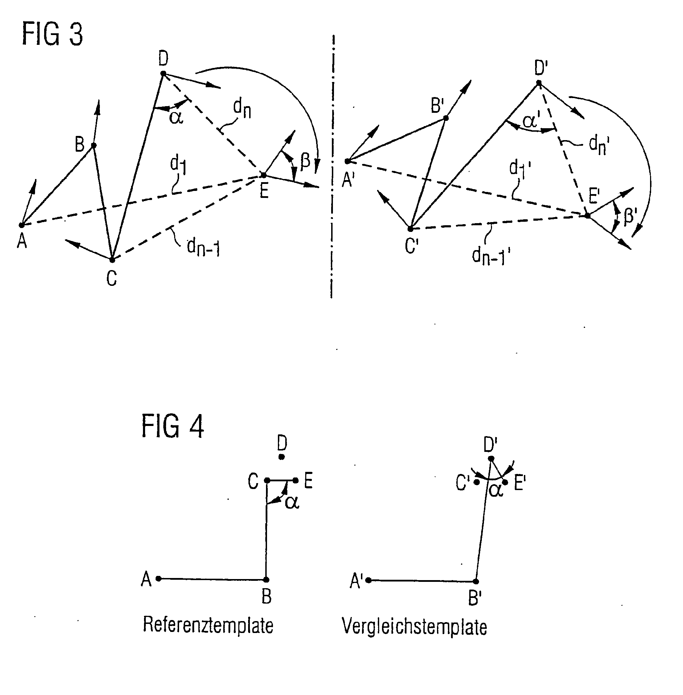

Wie in Figur 3 illustriert wird, werden folgende Kriterien überprüft, damit ein weiteres, zur Kette passendes Minutienpaar gefunden wird:

-    Der Abstand zwischen der neuen, potentiellen Minutie (im folgenden E genannt) zur ersten (A), vorletzten (C) und letzten Minutie (D),

- der Minutienwinkel von E, sowie
- der Winkel zwischen den Strecken C-D und D-E.

Hierbei gibt es einige Kriterien, deren Überprüfung eine gewisse Rechenzeit benötigt, nämlich die drei Distanzen und der Winkel $\alpha$. Es existiert jedoch eine einfache Möglichkeit, einige der Berechnungen nicht durchführen zu müssen: Ein Vergleich wird sofort abgebrochen, wenn ein Kriterium außerhalb einer vorgegeben Toleranz liegt. Das bedeutet, dass das zweite Kriterium seltener überprüft wird als das erste, das dritte seltener als das zweite, und so weiter. Es kommt oft vor, dass das fünfte Kriterium überhaupt nicht benötigt wird, da alle möglichen Punkte im Vergleichstemplate an den vorherigen vier Kriterien scheitern. Diese Erkenntnis bringt zwei Optimierungsmöglichkeiten mit sich:

- Optimale Überprüfungsreihenfolge der Kriterien: Hier ist der Winkel $\beta$ am einfachsten zu überprüfen, da dieser Wert nicht berechnet werden muss und nur die Verdrehung der Abdrücke einbezogen werden muss. Es ist also nur eine Addition (wegen der Verdrehung) und ein Vergleich (mit $\beta'$ im Vergleichstemplate) notwendig. Da die Vergleichs-minutien nach den Winkeln $\beta$ vorsortiert sind, kommt dazu, dass $\beta$ überhaupt nur bei wenigen Minutien überprüft werden muss.
- Distanzberechnungen sind geringfügig schneller als die Berechnung des Winkels $\alpha$, so dass zuerst die Distanzen und zuletzt $\alpha$ berechnet wird.
- Werteberechnung im Referenztemplate "on demand": Erst wenn eine Distanz ($d_1$, $d_n$ und $d_{n-1}$), bzw. der Winkel $\alpha$ überprüft werden muss, werden die Werte im Referenztemplate berechnet. Ist der Wert einmal berechnet, so wird dieser für die Suche nach einem Pendant zum aktuellen Punkt (Punkt E in Figur 3) wieder verwendet. Er wird daher jedes Mal ein zusätzlicher Vergleich benötigt, ob der Wert schon berechnet ist oder nicht. Allerdings ist dieser Zeitverlust geringer, als der Zeitgewinn durch das Nicht-Berechnen der nicht gebrauchten Werte.

Algorithmisch wird zuerst ein Baselinepaar gesucht und dazu eine möglichst lange Kette von Minutienpaaren gebildet. Kann kein weiteres Minutienpaar gefunden werden, wird nicht versucht, eine andere Kette zum aktuellen Baselinepaar zu finden. Der Zeitbedarf für einen Vergleich würde dadurch außerordentlich hoch (wenn man alle möglichen Ketten sucht) bei praktisch keiner Verbesserung der Fehlerraten.
Natürlich kann es sein, dass sich in die Kette ein falsches Minutienpaar gemogelt hat (vorausgesetzt man vergleicht zwei Abdrücke desselben Fingers). In diesem Fall gibt es zwei Möglichkeiten:

1. Die Kette wird fortgesetzt, weil die falsche Minutie im Vergleichstemplate der richtigen Minutie im Referenztemplate sehr nahe kommt. Dies ist der Normalfall.

2. Die Kette kommt zum Stillstand, da die echten Minutienpaare nicht mehr zu der Kette passen.

In Figur 4 wird zunächst ein richtiges Baselinepaar berechnet (A-B/ A'-B'). Allerdings wird dann zur Minutie C nicht C', sondern fälschlicherweise D' gefunden. Dies hat zur Folge, dass die Kette statt einer Länge von fünf nur eine Länge von drei erreicht. Für das obige Beispiel wurde impliziert, dass das Minutienpaar C/D' noch innerhalb der Suchtoleranzen liegt, und die weiteren Kombinationen D/C', D/ E', E/C' und E/E' außerhalb dieser Toleranzen liegen (bei E/E' ist z.B. die Differenz von $\alpha$ und $\alpha'$ zu groß).
Falls kein weiteres Minutienpaar gefunden wird, kann nicht überprüft werden, ob sich ein "falsches" Minutienpaar in der Kette befindet, man hat keinen Anhaltspunkt darüber, ob es noch eine längere Kette gibt oder nicht. Verschiedene Ketten zu probieren ist aus Gründen der Zeiteffizienz keine Alternative. Da aber, wenn es genügend Minutienpaare gibt, die zueinander passen, es auch reichlich Baselinepaare gibt, die gefunden werden können, vergleicht der Algorithmus die Länge der aktuellen Kette mit dem bisherigen Maximum (das Anfangs auf Eins gesetzt wird) und aktualisiert ggf. das Maximum und macht mit dem nächsten Baselinepaar weiter. Gibt es genügend Minutienpaare, so ist die Wahrscheinlichkeit sehr hoch, dass zu mindestens einem Baselinepaar eine Kette gefunden wird, die lang genug ist, so dass der Vergleich positiv ausfällt.
Wichtig für den Score, also die Beurteilung, ob das zugehörige Vergleichstemplate als korrekt zu bewerten ist, ist die maximale Kettenlänge, die gefunden werden kann. In die Score-Berechnung fließt auch die Größe der Templates mit ein. Score-Werte mit dem geometrischen Mittel der Template-Größen sind hierbei am Besten:

$$Score = \frac{Maximale\_Kettenlänge}{\sqrt{Minutien\_Vergleichstemplate \cdot Minutien\_Referenztemplate}}$$

.

Wenn das Baselinepaar in der Länge mit berücksichtigt wird und die Anzahl der Minutien im Referenz- und Vergleichstemplate gleich sind, so ist der maximale Score 1. Um die Wurzel zu umgehen, kann man Zähler und Nenner quadrieren.

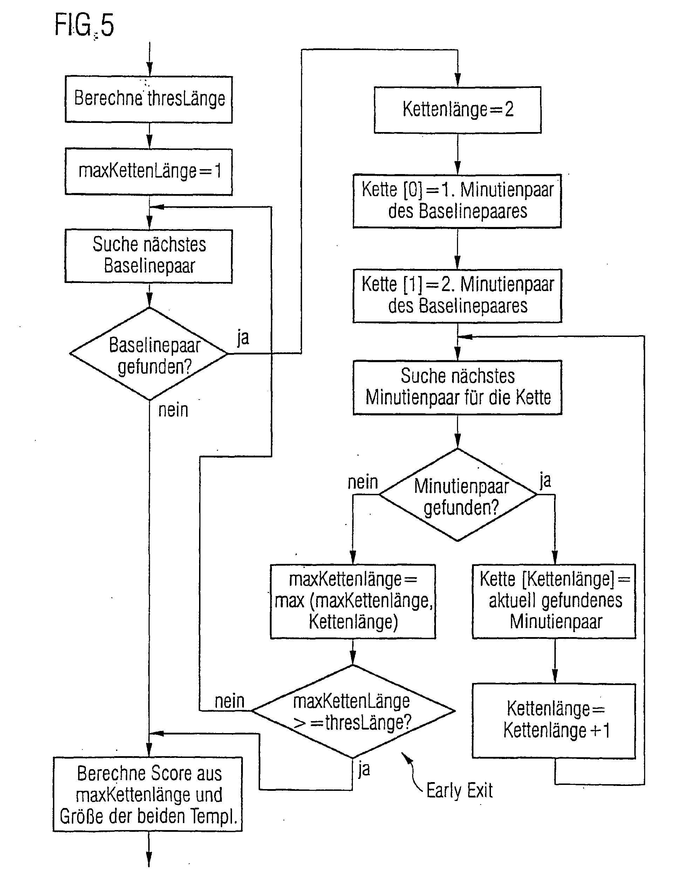

Der gesamte Algorithmus ist in Figur 5 mit den Schleifen zur Baselinesuche und zur Suche nach weiteren Minutienpaaren dargestellt. Hierbei ist eine Kette ein Array, welches die aktuelle Kette mit einem Minutienpaar pro Index speichert. "maxKettenlänge" speichert die Anzahl der Minutienpaare in der längsten bis dahin gefundenen Kette und "thresLänge" ist die Länge, ab der der Vergleich positiv abgebrochen werden kann.

Bei der Suche nach weiteren Gliedern im Referenztemplate werden nur Minutien betrachtet, die einen höheren Index besitzen, als das zuletzt gefundene Glied. Diese Einschränkung hat den Vorteil, dass im Schnitt nur die Hälfte der für das jeweils nächste Glied in Frage kommenden Minutien betrachtet werden. Des Weiteren entfällt die Prüfung im Referenztemplate auf bereits in der Kette vorhandene Minutien, da diese alle einen kleineren Index als die zuletzt gefundene Minutie besitzen. Durch diese Optimierung beschleunigt man den Algorithmus je nach Datenbank um etwa 30 %. Die Fehlerraten bleiben fast konstant, denn Minutien mit einem kleineren Index als die zuletzt gefundene Minutie wurde schon mindestens einmal in Betracht gezogen und abgelehnt. Es ist sehr unwahrscheinlich, dass sie an anderer Stelle in die Kette einbezogen werden kann.

Bei der Speicherung der Ketten werden alle Indizes der Vergleichsminutien im EEPROM-Speicher einer Chipkarte abgespeichert werden, um sicherzustellen, dass nicht eine Minutie mehrfach in der Kette vorkommt. Die Speicherung aller Indizes der Referenzminutien ist nicht notwendig, denn dies kann algorithmisch abgefangen werden, indem die Indizes der Referenzminutien in der Kette streng monoton steigen sind. Man benötigt auf diese Weise für die Weiterführung der Kette stets nur drei Indizes des Referenztemplates: die Indizes der ersten, vorletzten und letzten Minutie. Auf diese Weise muss man nur drei Byte für die Liste der Referenzminutien reservieren.

Die Indizes der Baselineminutien im Referenztemplate dürfen höchsten um einen fest definierten Wert (z.B. 4) verschieden sein. Die Idee hinter dieser Optimierung ist, dass nicht alle Baselinepaarmöglichkeiten durchprobiert werden müssen. Führen z.B. die Baselinepaare mit den Indizes 0-1, 0-9-1 0-3 und 0-4 im Referenztemplate zu keinem Erfolg, so kann man davon ausgehen, dass die Minutie im Referenztemplate mit dem Index 0 kein Pendant im Vergleichstemplate besitzt. Algorithmisch bietet sich deshalb in jedem Fall eine Überprüfung (z.B. als Schleifenabbruchkriterium) an..

Im folgenden werden die wesentlichen Punkte des erfindungsgemäßen Ketten-Matchers nacheinander aufgelistet:

- Verwendung der Arcus-Tangens- anstatt der herkömmlicherweise verwendeten Arcus-Cosinus-Funktion zum Bestimmen von Winkeln.
- Vorsortierung des Vergleichstemplates nach Minutienwinkeln.
- Erstes Vergleichskriterium ist daher immer der Minutienwinkel.
- Distanzen werden nicht vorberechnet, da durch vorherige Überprüfung von Minutienwinkeln nur vergleichsweise wenige Distanzen wirklich benötigt werden, so dass eine tabellarische Vorberechnung sich sogar negativ auf den Zeitbedarf auswirken würde.
- Daher kein Speicherplatzverbrauch für eine Distanztabelle.
- Die Werte einiger Vergleichskriterien werden im Referenztemplate "on demand" berechnet.
- Die Baselinepaarsuche ist hinreichend genau und prüft mit mehr Kriterien. So werden weniger falsche Baselinepaare benutzt.
- Nutzung eines Minutientypbits für den Minutienwinkel, d.h. es werden für Winkel immer acht Bit gebraucht. Auf diese Weise sind keine Umrechnungen nötig.
- Strukturoptimierter Quellcode, um Laufzeit zu verbessern.

Eine besonders vorteilhafte Ausführungeform des oben beschriebenen Ketten-Matchers ist der "schnelle Ketten-Matcher". Die Grundidee des schnellen Ketten-Matchers ist, dass beim Enrollment, also beim Aufzeichnen des Referenzfingerabdrucks, eine einzige Kette im Referenztemplate festgelegt wird, die dann bei der Verifikation im Vergleichstemplate gesucht wird. Falls die vorher festgelegte Kette nicht gefunden werden kann, wird der Vergleich negativ abgebrochen.

Prinzipiell ist der schnelle Algorithmus der gleiche wie der des normalen Ketten-Matchers. Es gibt jedoch den Unterschied, dass nur bestimmte Baselinepaare zugelassen werden. Entscheidend für die Ergebnisse ist die Wahl dieser bestimmten Baselinepaare. Als Idee steckt dahinter, dass man beim Enrollment entscheidet, welchen Pfad die Kette durch das Referenztemplate nehmen darf. Andere Pfade sind nicht zugelassen. Es kommt darauf an, einen Pfad zu finden, der optimale Ergebnisse liefert. Ein bestimmter Pfad bedeutet folgendes:

- Das Referenztemplate muss beim Enrollment nach diesem Pfad sortiert werden.
- Die Indizes der Referenzminutien in einem Baselinepaar müssen um genau eins verschieden sein.
- Fehlt ein Glied in der vorgegebenen Kette (kann also zu einer Minutie im Referenztemplate keine Minutie im Vergleichstemplate gefunden werden), so ist dieses Glied auszulassen und mit dem nächsten fortzufahren.

Der erste Punkt in obiger Auflistung dient als Vereinfachung der anderen beiden Punkte. Prinzipiell kann dieser vorgegebenen Pfad auch auf der Chipkarte z.B. im EEPROM-Speicher abgelegt sein, wenn jedoch die Minutien des Referenztemplates nach diesem Pfad sortiert sind, muss kein weiterer Speicherplatz auf der Chipkarte beansprucht werden. Eine solche Sortierung impliziert dann den zweiten Punkt, dass die Indizes der Referenzminutien in einem Baselinepaar stets nebeneinander liegen. Da es natürlich sein kann, dass im Vergleichstemplate nicht alle Minutien des Referenztemplates vorliegen, muss eine Lücke in dem Pfad akzeptiert werden (dritter Punkt in obiger Liste), sonst würden nur sehr viele kleine Ketten anstatt einer großen Kette gefunden werden.

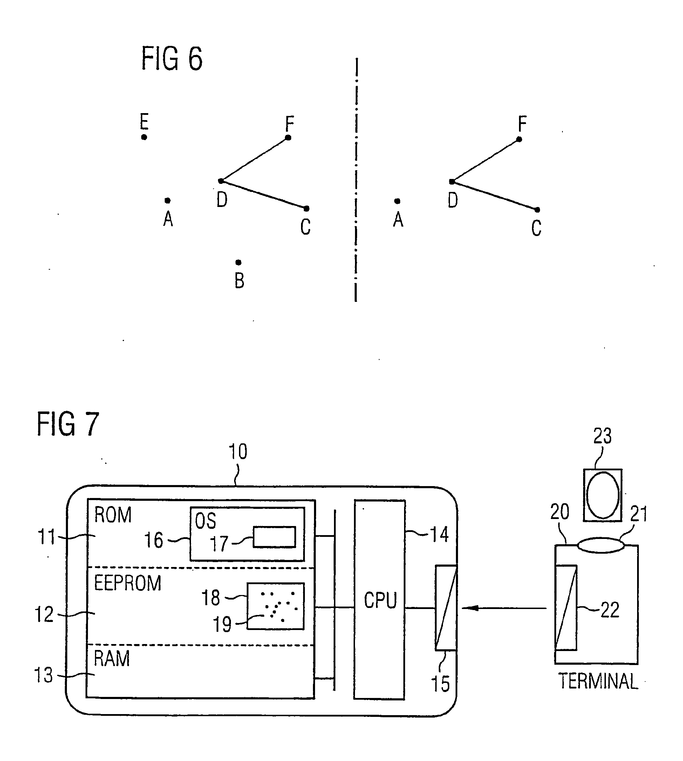

Figur 6 illustriert hierzu ein Beispiel. Zu den Minutien A, C, D und F im Referenztemplate (links) gibt es Äquivalente im Vergleichstemplate (rechts), allerdings nicht zu der Minutien B, deren Index zwischen den Indizes der Minutien A und C liegt, und der Minutie E, deren Index zwischen den Indizes der Minutien D und F liegt. Der normale Ketten-Matcher würde folgende Ketten finden (natürlich immer mit entsprechendem Gegenstück im Vergleichstemplate):

- Baseline A/ C, weitere Minutien D und F
- Baseline A/ D, weitere Minutie F
- Baseline A/F, keine weiteren Minutien
- Baseline C/D, weitere Minutie F
- Baseline C/F, keine weiteren Minutien
- Baseline D/F, keine weiteren Minutien

Die maximale Kettenlänge beträgt also 4. Da beim schnellen Ketten-Matcher die Indizes der Baseline im Referenztemplate nur um eins verschieden sein dürfen, findet sich bei diesem Algorithmus nur eine Kette:

- Baseline C/D, weitere Minutie F.

Hier beträgt die maximale Kettenlänge nur 3. Aus diesem Beispiel geht klar hervor, welche Ergebnisse zu erwarten sind: die Geschwindigkeit nimmt stark zu, die Fehlerraten werden etwas schlechter. Betrachtet man das Beispiel, so bietet sich eine Alternative an, um die Fehlerraten wieder etwas zu verbessern: man schränkt die Suche nach weiteren Minutienpaaren nicht ein, indem man nur Referenzminutien zulässt, die einen größeren Index als die - Indizes der Referenzminutien im Baselinepaar besitzen. Man sucht in der Kette also nicht nur vorwärts, sondern auch rückwärts. Im obigen Beispiel würde man dann (wieder genau) eine Kette finden:

- Baseline C/ D, weitere Minutien A und F.

Damit hat man auch hier eine Kettenlänge von 4. Diese Variante verspricht bessere Fehlerraten, die an den normalen Ketten-Matcher herankommen, allerdings auf Kosten der Zeit.

Das größte Problem beim schnellen Ketten-Matcher ist, den optimalen Weg beim Enrollment zu finden. Bei vielen Systemen ist es heute schon so, dass beim Enrollment mehrere Abdrücke genommen werden, um entweder den besten Abdruck auszuwählen, oder die Minutien aller Abdrücke zu einem neuen, optimalen Template zu verschmelzen (was i.d.R. nicht auf der Chipkarte, sondern außerhalb auf einem schnelleren Prozessor abläuft). Bei diesem Vorgang könnte man auch die Suche nach dem optimalen Weg implementieren. Dabei ist es sehr wichtig, dass sichere Minutien, die bei fast allen Abdrücken vorkommen, nacheinander kommen (wichtig für beide Varianten) und am Anfang liegen (für die erste Variante des schnellen Ketten-Matchers), denn so ist es sehr wahrscheinlich, dass mit Hilfe dieser Minutien Baselinepaare gefunden werden können. Eine weitere Idee für die Vorsortierung ist, dass man zusätzlich darauf achtet, dass die Entfernungen zwischen den (dem Index nach) benachbarten Referenzminutien groß genug sind, so dass die entsprechenden Baselinepaare von vornherein außerhalb des numerisch ungünstigen Bereichs liegen. Des Weiteren muss man aber berücksichtigen, dass Fingerabdrücke sehr oft verzerrt sind, so dass zu lange Baselines oft kein ideales Ergebnis liefern.

Um die Möglichkeiten eine Suche nach dem optimalen Pfad auszunutzen, können folgende Sortierungen (die Index-Reihenfolge soll den optimalen Pfad darstellen) im Referenztemplate vorgenommen werden:

- Keine,
- Sortierung nach Minutienwinkeln (wie im Vergleichstemplate),
- Zufall (je zwei Ergebnisse werden aufgelistet),
- Abstände zwischen zwei benachbarten Punkten wenn möglich größer als dxMax/4 und kleiner als dxMax/2. Dabei stellt dxMax die maximale Differenz zwischen den x-Koordianten zweier Minutien im Referenztemplate dar.

Diese Sortierungen haben den Vorteil, dass sie sehr schnell sind und so auf der Chipkarte während eines Vergleichs stattfinden können. Es sei erinnert, dass als Referenztemplate immer jenes Template ausgewählt wird, welches weniger Minutien besitzt. Würde man die Suche nach dem optimalen Pfad beim Enrollment durchführen, so ist ein Tausch der Templates nicht mehr (ohne weiteres) möglich.

Figur 7 zeigt schematisch eine Chipkarte 10, die über miteinander korrespondierende Schnittstellen 15, 22 an eine Verifikationsvorrichtung 20 angeschlossen ist, z.B. an ein Authentisierungsterminal für einen sicheren Gebäudebereich, einen Geldautomat oder eine sonstige Sicherheitsvorrichtung. Die Chipkarte 10 umfasst einen Prozessor 14 und eine Speicherhierarchie, bestehend aus einem permanenten ROM-Speicher 11, einem nichtflüchtigen und wiederbeschreibbaren EEPROM-Speicher 12 und einem flüchtigen RAM-Arbeitsspeicher 13. Im ROM-Speicher 11 residiert ein Betriebssystem 16 (z.B. JavaCard), das die grundsätzlichen Funktionen der Chipkarte wie Ein- und Ausgabe oder Speicherorganisation sowie Chipkarten-spezifische Funktionalitäten wie Kryptographie und Authentisierung bereitstellt. Unter anderem ist ein Biometriemodul 17 in das Betriebssystem integriert, das eines der obigen Minutien-Match-Verfahren zum Vergleich von Fingerabdrücken realisiert. Ebenso gut könnte das erfindungsgemäße Vergleichsverfahren auch als separate Softwarekomponente im EEPROM-Speicher 12 vorliegen (z.B. als Java-Applet) oder auch als Hardwarelösung in Form eines biometrischen Co-Prozessors realisiert sein.

Im EEPROM-Speicher 12 ist ein Speicherbereich 18 eingerichtet, in dem ein Datensatz der Referenzminutien 19 beim Enrollment und Einrichten der Chipkarte 10 abgelegt wurde. Die Referenzminutien 19 werden in der Regel in einem separaten Schritt aus einem aufgenommenen Referenzfingerabdruck extrahiert und in dem Speicherbereich 18 der Chipkarte 10 gespeichert. Obwohl dies das übliche Verfahren ist, ist es prinzipiell auch möglich, den vollständigen Referenzfingerabdruck im Speicherbereich 18 zu speichern und die Referenzminutien 19 erst auf der Chipkarte 10 zu extrahieren.

Für eine besonders bevorzugte Ausführungsform der vorliegenden Erfindung können die Referenzminutien 19 im Speicherbereich 18 als vorsortierte Folge abgelegt sein, um in der dadurch vorgegebenen Reihenfolge den Referenzminutien 19 entsprechende Vergleichsminuten zur Bildung von Minutienpaaren zu ermitteln.

Selbstverständlich kann der Speicherbereich 18 für die Referenzminutien 19 auch im ROM-Speicher 11 liegen. In diesem Fall müssen die Refernzminutien 19 jedoch bereits bei der Herstellung der Chipkarte 10 bzw. dem Einspielen des Betriebssystems 16 in dem ROM-Speicher 11 extrahiert und aufgespielt werden. In jedem Falle ist es zweckmäßig, den Speicherbereich 18 als besonders gesicherten Speicherbereich auszubilden, um die Referenzminutien 19 als biometrische Referenzinformation ausreichend zu schützen.

Wenn ein Benutzer der Chipkarte 10 an eine Verifikationsvorrichtung 20 herantritt, um mittels einer biometrischen Authentisierung seine Zugrangsberechtigung nachzuweisen, wird von einem Sensors 21 zunächst sein Vergleichsfingerabdruck 23 aufgezeichnet und digitalisiert. Der Sensor 21 kann z.B. ein optischer Sensors sein, beispielsweise eine CCD-Kamera, die direkt ein digitales Bild erzeugt, oder ein Ultraschallsensor. Sodann wird der Vergleichsfingerabdruck 23 (im Klartext, komprimiert oder verschlüsselt) an die Chipkarte 10 übertragen, wo er im EEPROM-Speicher 12 zur Weiterverarbeitung abgelegt wird.

Der eigentliche Vergleich bzw. das Matching wird dann von dem Biometriemodul 17 durchgeführt, indem aus dem Vergleichsfingerabdruck 23 die Vergleichsminutien extrahiert werden, um ihre Übereinstimmung mit den Referenzminutien 19 nach einem der oben beschriebenen Verfahren zu prüfen. Aus einer hinreichenden, nach vorgegebenen Kriterien beurteilten Übereinstimmung der Vergleichs- und Referenzminutien 19 kann auf eine Übereinstimmung des Vergleichsfingerabdrucks 23 mit dem Referenzfingerabdruck und schließlich die Berechtigung der Person rückgeschlossen werden.

**Patentansprüche**

1. Verfahren zum biometrischen Verifizieren eines Vergleichsfingerabdrucks einer Person anhand eines Referenzfingerabdrucks mittels Vergleichen von Vergleichsminutien (A', B', C', D', E', F') des Vergleichsfingerabdrucks mit Referenzminutien (A, B, C, D, E, F) des Referenzfingerabdrucks zum Zweck der Authentifizierung der Person durch die Schritte:

- Ermitteln eines Baselinepaars (A-B, A'-B'), bestehend aus zwei Minutienpaaren (A-A', B-B'), die jeweils aus einander entsprechenden Vergleichsminutien (A', B') und Referenzminutien (A, B) gebildet sind;

- Ermitteln dritter Minutienpaare (C-C', D-D') aus jeweils einander entsprechenden Vergleichsminutien (C', D') und Referenzminutien (C, D);

- Ermitteln von möglichst vielen weiteren Minutienpaaren (E-E') aus jeweils einander entsprechenden Vergleichsminutien (E') und Referenzminutien (E);

- Beurteilen des Vergleichsfingerabdrucks der Person anhand der ermittelten Minutienpaare, wobei die Person als authentifiziert gilt, wenn die Anzahl aller ermittelten Minutienpaare einen vorgegebenen Schwellwert überschreitet;

**dadurch gekennzeichnet, dass**:

- die ermittelten Minutienpaare eine mit den Minutienpaaren (A-A', B-B') des Baselinepaares (A-B, A'-B') beginnende Kette definieren, die Kette um jedes ermittelte Minutienpaar (C-C', D-D') verlängert wird, wobei die Kette zumindest drei ermittelte Minutienpaare umfasst und die Reihenfolge der ermittelten Minutienpaare in der Kette unveränderlich festgelegt ist,

- drei Bezugsminutienpaare innerhalb der Kette aller bereits ermittelten Minutienpaare (A-A', B-B', C-C', D-D') bestimmt werden und

- ein weiteres Minutienpaar (E-E') anhand der drei bestimmten Bezugsminutienpaare ermittelt wird, indem geometrische Relationen zwischen einer ausgewählten Referenzminutie (E) und den Referenzminutien der drei Bezugsminutienpaare mit geometrischen Relationen einer ausgewählten Vergleichsminutie (E') und den Vergleichsminutien der drei Bezugsminutienpaare verglichen werden.

2. Verfahren nach Anspruch 1, **dadurch gekennzeichnet, dass** als Bezugsminutienpaare die an erster, an vorletzter und an letzter Position der Kette befindlichen Minutienpaare dienen.

3. Verfahren nach Anspruch 1 oder 2, **dadurch gekennzeichnet, dass** bei der Ermittlung des weiteren Minutienpaares (E-E') in die Relationen die Distanzen der Minutien des weiteren Minutienpaars (E-E') zu den entsprechenden Minutien der Bezugsminutienpaare eingehen.

4. Verfahren nach einem der Ansprüche 1 bis 3, **dadurch gekennzeichnet, dass** bei der Ermittlung des weiteren Minutienpaares (E-E') in die Relationen die von den Minutien des weiteren Minutienpaars (E-E') und den entsprechenden Minutien des letzten und des vorletzten Minutienpaars der Kette eingeschlossenen Winkel eingehen.

5. Verfahren nach einem der Ansprüche 1 bis 4, **dadurch gekennzeichnet, dass** eine Minutie einen Minutienwinkel besitzt und bei der Ermittlung des weiteren Minutienpaares (E-E') der Minutienwinkel der Vergleichsminutie des weiteren Minutienpaares (E-E') mit dem Minutienwinkel der Referenzminutie des weiteren Minutienpaars (E-E') verglichen wird.

6. Verfahren nach Anspruch 5, **dadurch gekennzeichnet, dass** bei der Ermittlung des weiteren Minutienpaares (E-E') zuerst die Minutienwinkel verglichen werden und das Ermitteln abgebrochen wird, falls diese nicht innerhalb eines vorgegebenen Toleranzbereichs liegen.

7. Verfahren nach Anspruch 6 mit 3, **dadurch gekennzeichnet, dass** nach dem Vergleichen der Minutienwinkel der Minutien des weiteren Minutienpaars (E-E') die Distanzen der Minutien des weiteren Minutienpaars (E-E') verglichen werden und das Ermitteln abgebrochen wird, falls diese nicht innerhalb vorgegebener Toleranzbereiche liegen.

8. Verfahren nach Anspruch 6 oder 7, **dadurch gekennzeichnet, dass** bei einem Abbruch des Ermittelns des weiteren Minutienpaars (E-E') dieses Ermitteln mit einer anderen Vergleichsminutie und/oder einer anderen Referenzminutie erneut durchgeführt wird.

9. Verfahren nach einem der Ansprüche 1 bis 8, **dadurch gekennzeichnet, dass** die Vergleichsminutien anhand ihrer Minutienwinkel sortiert werden, bevor der Vergleich mit Referenzminutinen erfolgt.

10. Verfahren nach einem der Ansprüche 1 bis 9, **dadurch gekennzeichnet, dass** der Vergleichsfingerabdruck der Person beurteilt wird, sobald kein weiteres Minutienpaar (E-E') ermittelt werden kann.

11. Verfahren nach einem der Ansprüche 1 bis 10, **dadurch gekennzeichnet, dass** beim Ermitteln des weiteren Minutienpaares (E-E') Winkel und/oder Distanzen von Referenzminutien erst berechnet werden, wenn sie zum Vergleichen mit Winkeln und/ oder Distanzen der entsprechenden Vergleichsminutien benötigt werden.

12. Verfahren nach Anspruch 11, **dadurch gekennzeichnet, dass** berechnete Winkel und Distanzen für weitere Vergleiche gespeichert werden.

13. Verfahren nach einem der Ansprüche 1 bis-12, **dadurch gekennzeichnet, dass** die Reihenfolge der beim Ermitteln der Baselinepaare und weiteren Minutienpaare (E-E') zu berücksichtigenden Referenzminutien durch eine vorgegebene Referenzminutien-Folge bestimmt wird.

14. Verfahren nach Anspruch 13, **dadurch gekennzeichnet, dass**, falls in der von der Referenzminutien-Folge bestimmten Reihenfolge für eine Referenzminutie kein Minutienpaar (E-E') ermittelt werden kann, mit der nächsten Referenzminutie der Folge fortgefahren wird.

15. Verfahren nach Anspruch 13 oder 14, **dadurch gekennzeichnet, dass** beim Bilden des Baselinepaars (A-B, A'B') nur Referenzminutien berücksichtigt werden, die in der Referenzminutien-Folge unmittelbar aufeinander folgen.

16. Verfahren zum Bereitstellen von Referenzminutien eines Referenzfingerabdrucks zum biometrischen Verifizieren eines Vergleichsfingerabdrucks einer Person anhand der Referenzminutien gemäß einem der vorhergehenden Ansprüche, **dadurch gekennzeichnet, dass** aus den extrahierten, Referenzminutien anhand von vorgegebenen Kriterien eine Referenzminutien-Folge ermittelt und zusammen mit den Referenzminutien bereitgestellt wird.

17. Verfahren nach Anspruch 16, **dadurch gekennzeichnet, dass** die Referenzminutien-Folge die Reihenfolge vorgibt, in der für die Referenzminutien beim Verifizieren des Vergleichsfingerabdrucks zugehörige Vergleichsminutien des Vergleichsfingerabdrucks ermittelt werden.

18. Verfahren nach Anspruch 16 oder 17, **dadurch gekennzeichnet, dass** die Referenzminutien-Folge anhand von Minutienwinkeln der Referenzminutien ermittelt wird.

19. Chipkarte (10) zum biometrischen Verifizieren eines Vergleichsfingerabdrucks (23) einer Person anhand eines Referenzfingerabdrucks, umfassend einen Speicher, einen Prozessor (14) und ein von dem Prozessor (14) ausführbares Biometriemodul (17) zum Vergleichen von Vergleichsminutien des Vergleichsfingerabdrucks (23) mit Referenzminutien (19) des Referenzfingerabdrucks, wobei:

- der Speicher eingerichtet ist, die Referenzminutien (19) des Referenzfingerabdrucks zu speichern; und
- das Biometriemodul (17) eingerichtet ist, ein Baselinepaar, zumindest ein drittes Minutienpaar und möglichst viele weitere Minutienpaare zu ermitteln und den Vergleichsfingerabdruck (23) der Person anhand der ermittelten Minutienpaare zu beurteilen, wobei das Baselinepaar zwei jeweils aus einander entsprechenden Vergleichsminutien und Referenzminutien (19) gebildete Minutienpaare umfasst und das dritte Minutienpaar eine Vergleichsminutie und eine entsprechende Referenzminutie (19) umfasst;

**dadurch gekennzeichnet, dass**
das Biometriemodul (19) desweiteren eingerichtet ist:

- aus den ermittelten Minutienpaare eine mit dem Baselinepaar beginnende Kette zu definieren;
- die Kette um jedes ermittelte Minutienpaar zu verlängern, wobei die Kette zumindest drei ermittelte Minutienpaare umfasst und die Reihenfolge der ermittelten Minutienpaare in der Kette unveränderlich festgelegt ist;
- drei Bezugsminutienpaare innerhalb der Kette aller bereits ermittelten Minutienpaare zu bestimmen;
- ein weiteres Minutienpaar anhand der drei bestimmten Bezugsminutienpaare zu ermitteln, indem geometrische Relationen zwischen einer ausgewählten Referenzminutie und den Referenzminutien der drei Bezugsminutienpaare mit geometrischen Relationen einer ausgewählten Vergleichsminutie und den Vergleichsminutien der drei Bezugsminutienpaare verglichen werden; und

der Speicher desweiteren eingerichtet ist, die Kette der ermittelten Minutienpaare abzuspeichern.

20. Chipkarte (10) nach Anspruch 19, **dadurch gekennzeichnet, dass** als Speicher ein nichtflüchtiger Speicher (12) und/oder ein Permanentspeicher (11) verwendet wird.

21. Chipkarte (10) nach Anspruch 19 oder 20, **dadurch gekennzeichnet, dass** das Biometriemodul (17) in ein in einem Permanentspeicher (11) residierenden Betriebssystem (16) der Chipkarte (10) integriert ist oder in einem nichtflüchtigen Speicher (12) liegt oder als biometrischer Co-Prozessor realisiert ist.

22. Chipkarte (10) nach einem der Ansprüche 19 bis 21, **dadurch gekennzeichnet, dass** das Biometriemodul (17) eingerichtet ist, als Bezugsminutienpaare die an erster, an vorletzte und an letzter Position der Kette befindlichen Minutienpaare zu bestimmen.

23. Chipkarte (10) nach einem der Ansprüche 19 bis 22, **dadurch gekennzeichnet, dass** das Biometriemodul (17) eingerichtet ist, bei der Ermittlung des weiteren Minutienpaars in die Relationen die Distanzen der Minutien des weiteren Minutienpaars zu den entsprechenden Minutien der Bezugsmi-nutienpaare aufzunehmen.

24. Chipkarte (10) nach einem der Ansprüche 19 bis 23, **dadurch gekennzeichnet, dass** das Biometriemodul (17) eingerichtet ist, bei der Ermittlung des weiteren Minutienpaars in die Relationen die von den Minutien des weiteren Minutienpaars und den entsprechenden Minutien des letzten und des vorletzten Minutienpaars der Kette eingeschlossenen Winkel aufzunehmen.

25. Chipkarte (10) nach einem der Ansprüche 19 bis 24, **dadurch gekennzeichnet, dass** das Biometriemodul (17) eingerichtet ist, bei der Ermittlung des weiteren Minutienpaars den Minutienwinkel der Vergleichsminutie des weiteren Minutienpaars mit dem Minutienwinkel der Referenzminutie (19) des weiteren Minutienpaars zu vergleichen.

26. Chipkarte (10) nach Anspruch 25, **dadurch gekennzeichnet, dass** das Biometriemodul (17) eingerichtet ist, bei der Ermittlung des weiteren Minutienpaars zuerst die Minutienwinkel zu vergleichen und das Ermitteln abzubrechen, falls diese nicht innerhalb eines vorgegebenen Toleranzbereichs liegen.

27. Chipkarte (10) nach Anspruch 26 mit 23, **dadurch gekennzeichnet, dass** das Biometriemodul (17) eingerichtet ist, nach dem Vergleichen der Minutienwinkel der Minutien des weiteren Minutienpaars die Distanzen der Minutien des weiteren Minutienpaars zu vergleichen und das Ermitteln abzubrechen, falls diese nicht innerhalb vorgegebener Toleranzbereiche liegen.

28. Chipkarte 10 nach Anspruch 26 oder 27, **dadurch gekennzeichnet, dass** das Biometriemodul (17) eingerichtet ist, bei einem Abbruch des Ermittelns des weiteren Minutienpaars dieses Ermitteln mit einer anderen Vergleichsminutie und/oder einer anderen Referenzminutie (19) erneut durchzuführen.

29. Chipkarte (10) nach einem der Ansprüche 25 bis 27, **dadurch gekennzeichnet, dass** das Biometriemodul (17) eingerichtet ist, die Vergleichsminutien anhand ihrer Minutienwinkel zu sortieren, bevor der Vergleich mit Referenzminutinen (19) erfolgt, und die Chipkarte einen nichtflüchtiger Speicher (12) umfasst, der eingerichtet ist, diese Sortierung der Vergleichsminutien zu speichern.

30. Chipkarte (10) nach einem der Ansprüche 19 bis 29, **dadurch gekennzeichnet, dass** das Biometriemodul (17) eingerichtet ist den Vergleichsfingerabdruck (23) der Person zu beurteilen, sobald kein weiteres Minutienpaar ermittelt werden kann.

31. Chipkarte (10) nach einem der Ansprüche 19 bis 30, **dadurch gekennzeichnet, dass** das Biometriemodul (17) eingerichtet ist, beim Ermitteln des weiteren Minutienpaars Winkel und/oder Distanzen der Referenzminutien (19) erst zu berechnen, wenn sie zum Vergleich mit Winkeln und/ oder Distanzen der entsprechenden Vergleichsminutien benötigt werden.

32. Chipkarte (10) nach Anspruch 31, **dadurch gekennzeichnet, dass** das Biometriemodul (17) eingerichtet ist, berechnete Winkel und Distanzen für weitere Vergleiche in einem nichtflüchtigen Speicher (12) abzuspeichern.

33. Chipkarte (10) nach einem der Ansprüche 19 bis 32, **dadurch gekennzeichnet, dass** der Speicher eingerichtet ist, zu den Referenzminutien (19) eine vorgegebene Referenzminutien-Folge zu speichern, und das Biometriemodul (17) eingerichtet ist, die Referenzminutien (19) beim Ermitteln des Baselinepaars und der weiteren Minutienpaare in der von der Referenzminutien-Folge vorgegebenen Reihenfolge zu berücksichtigen.

34. Chipkarte (10) nach Anspruch 33, **dadurch gekennzeichnet, dass** das Biometriemodul (17) eingerichtet ist, mit der nächsten Referenzminutie (19) der Folge fortzufahren, falls in der von der Referenzminutien-Folge bestimmten Reihenfolge für eine Referenzminutie (19) kein Minutienpaar ermittelt werden kann.

35. Chipkarte (10) nach Anspruch 33 oder 34, **dadurch gekennzeichnet, dass** das Biometriemodul (17) eingerichtet ist, beim Ermitteln des Baselinepaars nur Referenzminutien (19) zu berücksichtigen, die in der Referenzminutien-Folge unmittelbar aufeinander folgen.

36. Chipkarte (10) nach einem der Ansprüche 19 bis 25, **dadurch gekennzeichnet, dass** die Chipkarte (10) eine Datenkommunikationsschnittstelle (15) umfasst, über die der Vergleichfingerabdruck (23) empfangen wird.

37. Computerprogramm, **dadurch gekennzeichnet, dass** es ein Verfahren nach einem der Ansprüche 1 bis 18 realisiert.

38. System zum biometrischen Verifizieren eines Vergleichsfingerabdrucks (23) einer Person anhand eines Referenzfingerabdrucks, **gekennzeichnet durch** eine Chipkarte (10) nach einem der Ansprüche 19 bis 36 und eine Verifikationsvorrichtung (20), wobei die Verifikationsvorrichtung (20) einen Sensor (21) aufweist, der eingerichtet ist, den Vergleichsfingerabdruck (23) der Person aufzuzeichnen.

39. System nach Anspruch 39, **dadurch gekennzeichnet, dass** die Verifikationsvorrichtung (20) eine Datenkommunikationsschnittstelle (22) aufweist, die eingerichtet ist, mit der Datenkommunikationsschnittstelle (15) der Chipkarte (10) zu korrespondieren und den Vergleichsfingerabdruck (23) an die Chipkarte (10) zu übertragen.


**Claims**

1. A method for biometrically verifying a person's comparison fingerprint on the basis of a reference fingerprint by comparing comparison minutiae (A', B', C', D', E', F') of the comparison fingerprint with reference minutiae (A, B, C, D, E, F) of the reference fingerprint for the purpose of authenticating the person by the steps of:

   - ascertaining a baseline pair (A-B, A'-B'), consisting of two minutiae pairs (A-A', B-B') which are respectively formed from mutually corresponding comparison minutiae (A', B') and reference minutiae (A, B);
   - ascertaining third minutiae pairs (C-C', D-D') from respectively mutually corresponding comparison minutiae (C', D') and reference minutiae (C, D);
   - ascertaining as many further minutiae pairs (E-E') as possible from respectively mutually corresponding comparison minutiae (E') and reference minutiae (E);
   - judging the person's comparison fingerprint on the basis of the ascertained minutiae pairs, whereby the person is deemed authenticated when the number of all ascertained minutiae pairs exceeds a specified threshold value;

   **characterized in that**:

   - the ascertained minutiae pairs define a chain beginning with the minutiae pairs (A-A', B-B') of the baseline pair (A-B, A'-B'), the chain is extended by each ascertained minutiae pair (C-C', D-D'), whereby the chain comprises at least three ascertained minutiae pairs and the order of the ascertained minutiae pairs in the chain is invariably fixed,
   - three benchmark minutiae pairs are determined within the chain of all already ascertained minutiae pairs (A-A', B-B', C-C', D-D'), and
   - a further minutiae pair (E-E') is ascertained on the basis of the three determined benchmark minutiae pairs by comparing geometrical relations between a selected reference minutia (E) and the reference minutiae of the three benchmark minutiae pairs with geometrical relations of a selected comparison minutia (E') and the comparison minutiae of the three benchmark minutiae pairs.

2. The method according to claim 1, **characterized in that** the minutiae pairs located in the first, the next to last and the last position of the chain serve as the benchmark minutiae pairs.

3. The method according to claim 1 or 2, **characterized in that** the distances of the minutiae of the further minutiae pair (E-E') from the corresponding minutiae of the benchmark minutiae pairs go into the relations upon the ascertainment of the further minutiae pair (E-E').

4. The method according to any of claims 1 to 3, **characterized in that** the angles enclosed by the minutiae of the further minutiae pair (E-E') and the corresponding minutiae of the last and the next to last minutiae pair of the chain go into the relations upon the ascertainment of the further minutiae pair (E-E').

5.  The method according to any of claims 1 to 4, **characterized in that** a minutia possesses a minutia angle and is compared with the minutia angle of the reference minutia of the further minutiae pair (E-E) upon the ascertainment of the further minutiae pair (E-E').

6.  The method according to claim 5, **characterized in that** the minutia angles are first compared, upon the ascertainment of the further minutiae pair (E-E'), and the ascertaining is aborted if said angles do not lie within a specified tolerance range.

7.  The method according to claims 6 with 3, **characterized in that** after the comparing of the minutia angles of the minutiae of the further minutiae pair (E-E'), the distances of the minutiae of the further minutiae pair (E-E') are compared and the ascertaining is aborted if said distances do not lie within specified tolerance ranges.

8.  The method according to claim 6 or 7, **characterized in that** upon an abort of the ascertaining of the further minutiae pair (E-E'), said ascertaining is carried out again with another comparison minutia and/or another reference minutia.

9.  The method according to any of claims 1 to 8, **characterized in that** the comparison minutiae are sorted on the basis of their minutia angles before the comparison with reference minutiae is effected.

10. The method according to any of claims 1 to 9, **characterized in that** the person's comparison fingerprint is judged as soon as no further minutiae pair (E-E') can be ascertained.

11. The method according to any of claims 1 to 10, **characterized in that** upon the ascertaining of the further minutiae pair (E-E'), angles and/or distances of reference minutiae are only calculated when they are required for comparing with angles and/or distances of the corresponding comparison minutiae.

12. The method according to claim 11, **characterized in that** calculated angles and distances are stored for further comparisons.

13. The method according to any of claims 1 to 12, **characterized in that** the order of the reference minutiae to be taken into consideration upon the ascertaining of the baseline pairs and further minutiae pairs (E-E') is determined by a specified reference minutia sequence.

14. The method according to claim 13, **characterized in that**, if no minutiae pair (E-E') can be ascertained for a reference minutia in the order determined by the reference minutia sequence, one continues with the next reference minutia of the sequence.

15. The method according to claim 13 or 14, **characterized in that** upon the forming of the baseline pair (A-B. A'B') there are taken into consideration only reference minutiae that directly succeed one another in the reference minutia sequence.

16. A method for providing reference minutiae of a reference fingerprint for biometrically verifying a person's comparison fingerprint on the basis of the reference minutiae according to any of the preceding claims, **characterized in that** a reference minutia sequence is ascertained from the extracted reference minutiae on the basis of specified criteria and provided together with the reference minutiae.

17. The method according to claim 16, **characterized in that** the reference minutia sequence specifies the order in which associated comparison minutiae of the comparison fingerprint are ascertained for the reference minutiae upon verifying of the comparison fingerprint.

18. The method according to claim 16 or 17, **characterized in that** the reference minutia sequence is ascertained on the basis of minutia angles of the reference minutiae.

19. A chip card (10) for biometrically verifying a person's comparison fingerprint (23) on the basis of a reference fingerprint, comprising a memory, a processor (14) and a biometric module (17) executable by the processor (14) for comparing comparison minutiae of the comparison fingerprint (23) with reference minutiae (19) of the reference fingerprint, whereby:

- the memory is adapted to store the reference minutiae (19) of the reference fingerprint; and
- the biometric module (17) is adapted to ascertain a baseline pair, at least a third minutiae pair and as many further minutiae pairs as possible and to judge the person's comparison fingerprint (23) on the basis of the ascertained minutiae pairs, whereby the baseline pair comprises two minutiae pairs respectively formed from mutually corresponding comparison minutiae and reference minutiae (19), and the third minutiae pair comprises a comparison minutia and a corresponding reference minutia (19);

**characterized in that**
the biometric module (19) is furthermore adapted to:

- define a chain beginning with the baseline pair from the ascertained minutiae pairs;
- extend the chain by each ascertained minutiae pair, whereby the chain comprises at least three ascertained minutiae pairs and the order of the ascertained minutiae pairs in the chain is invariably fixed;
- determine three benchmark minutiae pairs within the chain of all already ascertained minutiae pairs;
- ascertain a further minutiae pair on the basis of the three determined benchmark minutiae pairs by comparing geometrical relations between a selected reference minutia and the reference minutiae of the three benchmark minutiae pairs with geometrical relations of a selected comparison minutia and the comparison minutiae of the three benchmark minutiae pairs; and

the memory is furthermore adapted to store the chain of the ascertained minutiae pairs.

20. The chip card (10) according to claim 19, **characterized in that** a non-volatile memory (12) and/or a permanent memory (11) is employed as the memory.

21. The chip card (10) according to claim 19 or 20, **characterized in that** the biometric module (17) is integrated into an operating system (16) of the chip card (10) residing in a permanent memory (11) or lies in a non-volatile memory (12) or is realized as a biometric co-processor.

22. The chip card (10) according to any of claims 19 to 21, **characterized in that** the biometric module (17) is adapted to determine as benchmark minutiae pairs the minutiae pairs located at the first, the next to last and the last position of the chain.

23. The chip card (10) according to any of claims 19 to 22, **characterized in that** the biometric module (17) is adapted to include in the relations, upon the ascertainment of the further minutiae pair, the distances of the minutiae of the further minutiae pair from the corresponding minutiae of the benchmark minutiae pairs.

24. The chip card (10) according to any of claims 19 to 23, **characterized in that** the biometric module (17) is adapted to include in the relations, upon the ascertainment of the further minutiae pair, the angles enclosed by the minutiae of the further minutiae pair and the corresponding minutiae of the last and the next to last minutiae pair of the chain.

25. The chip card (10) according to any of claims 19 to 24, **characterized in that** the biometric module (17) is adapted to compare, upon the ascertainment of the further minutiae pair, the minutia angle of the comparison minutia of the further minutiae pair with the minutia angle of the reference minutia (19) of the further minutiae pair.

26. The chip card (10) according to claim 25, **characterized in that** the biometric module (17) is adapted to first compare the minutia angles upon the ascertainment of the further minutiae pair, and to abort the ascertaining if said angles do not lie within a specified tolerance range.

27. The chip card (10) according to claims 26 with 23, **characterized in that** the biometric module (17) is adapted to compare the distances of the minutiae of the further minutiae pair after the comparing of the minutia angles of the minutiae of the further minutiae pair, and to abort the ascertaining if said distances do not lie within specified tolerance ranges.

28. The chip card (10) according to claim 26 or 27, **characterized in that** upon an abort of the ascertaining of the further minutiae pair the biometric module (17) is adapted to carry out said ascertaining again with another comparison minutia and/or another reference minutia (19).

**29.** The chip card (10) according to any of claims 25 to 27, **characterized in that** the biometric module (17) is adapted to sort the comparison minutiae on the basis of their minutia angles before the comparison with reference minutiae (19) is effected, and the chip card comprises a non-volatile memory (12) which is adapted to store said sorting of the comparison minutiae.

**30.** The chip card (10) according to any of claims 19 to 29, **characterized in that** the biometric module (17) is adapted to judge the person's comparison fingerprint (23) as soon as no further minutiae pair can be ascertained.

**31.** The chip card (10) according to any of claims 19 to 30, **characterized in that** upon the ascertaining of the further minutiae pair, the biometric module (17) is adapted to calculate angles and/or distances of the reference minutiae (19) only when they are required for comparison with angles and/or distances of the corresponding comparison minutiae.

**32.** The chip card (10) according to claim 31, **characterized in that** the biometric module (17) is adapted to store calculated angles and distances in a non-volatile memory (12) for further comparisons.

**33.** The chip card (10) according to any of claims 19 to 32, **characterized in that** the memory is adapted to store a specified reference minutia sequence for the reference minutiae (19), and the biometric module (17) is adapted to take into consideration the reference minutiae (19) upon the ascertaining of the baseline pair and the further minutiae pairs in the order specified by the reference minutia sequence.

**34.** The chip card (10) according to claim 33, **characterized in that** the biometric module (17) is adapted to continue with the next reference minutia (19) of the sequence if no minutiae pair can be ascertained for a reference minutia (19) in the order determined by the reference minutia sequence.

**35.** The chip card (10) according to claim 33 or 34, **characterized in that** the biometric module (17) is adapted to take into consideration, upon the ascertaining of the baseline pair, only reference minutiae (19) that directly succeed one another in the reference minutia sequence.

**36.** The chip card (10) according to any of claims 19 to 25, **characterized in that** the chip card (10) comprises a data communication interface (15) via which the comparison fingerprint (23) is received.

**37.** A computer program product, **characterized in that** it realizes a method according to any of claims 1 to 18.

**38.** A system for biometrically verifying a person's comparison fingerprint (23) on the basis of a reference fingerprint, **characterized by** a chip card (10) according to any of claims 19 to 36 and a verification apparatus (20), whereby the verification apparatus (20) has a sensor (21) which is adapted to record the person's comparison fingerprint (23).

**39.** The system according to claim 39, **characterized in that** the verification apparatus (20) has a data communication interface (22) which is adapted to correspond with the data communication interface (15) of the chip card (10) and to transfer the comparison fingerprint (23) to the chip card (10).

**Revendications**

**1.** Procédé de vérification biométrique d'une empreinte digitale de comparaison d'une personne à l'aide d'une empreinte digitale de référence au moyen de comparaisons de minuties de comparaison (A', B', C', D', E', F') de l'empreinte digitale de comparaison avec des minuties de référence (A, B, C, D, E, F) de l'empreinte digitale de référence dans le but de l'authentification de la personne par les étapes :

- identification d'une paire de lignes de base (A-B, A'-B'), consistant en deux paires de minuties (A-A', B-B') qui sont respectivement formées de minuties de comparaison (A', B') et minuties de référence (A, B) correspondant entre elles ;
- identification de troisièmes paires de minuties (C-C', D-D') issues de minuties de comparaison (C', D') et minuties de référence (C, D) correspondant respectivement entre elles ;
- identification d'autant d'autres paires de minuties (E-E') que possible issues de minuties de comparaison (E') et minuties de référence (E) correspondant respectivement entre elles ;
- appréciation de l'empreinte digitale de comparaison de la personne à l'aide des paires de minuties identifiées, la personne étant considérée comme authentifiée quand le nombre de toutes les paires de minuties identifiées dépasse une valeur-seuil donnée ;

**caractérisé en ce que** :

- les paires de minuties identifiées définissent une chaîne commençant par les paires de minuties (A-A', B-B') de la paire de lignes de base (A-B, A'-B'), la chaîne est prolongée de chaque paire de minuties identifiée (C-C', D-D'), la chaîne comprenant au moins trois paires de minuties identifiées et l'ordre des paires de minuties identifiées étant fixé de manière inchangeable dans la chaîne,
- trois paires de minuties de repère sont déterminées dans la chaîne de toutes les paires de minuties déjà identifiées (A-A', B-B', C-C', D-D') et
- une autre paire de minuties (E-E') est, à l'aide des trois paires de minuties de repère déterminées, identifiée par comparaison de relations géométriques entre une minutie de référence (E) choisie et les minuties, de référence des trois paires de minuties de repère avec des relations géométriques entre une minutie de comparaison (E') choisie et les minuties de comparaison des trois paires de minuties de repère.

2. Procédé selon la revendication 1, **caractérisé en ce que** ce sont les paires de minuties se trouvant en première, en avant-dernière et en dernière position de la chaîne qui servent de paires de minuties de repère.

3. Procédé selon la revendication 1 ou 2, **caractérisé en ce que**, lors de l'identification de l'autre paire de minuties (E-E'), les distances des minuties de l'autre paire de minuties (E-E') par rapport aux minuties correspondantes des paires de minuties de repère entrent dans les relations.

4. Procédé selon une des revendications de 1 à 3, **caractérisé en ce que**, lors de l'identification de l'autre paire de minuties (E-E'), les angles inclus par les minuties de l'autre paire de minuties (E-E') et par les minuties correspondantes de la dernière et de l'avant-dernière paire de minuties de la chaîne entrent dans les relations.

5. Procédé selon une des revendications de 1 à 4, **caractérisé en ce qu'**une minutie possède un angle de minutie et **en ce que**, lors de l'identification de l'autre paire de minuties (E-E'), l'angle de minutie de la minutie de comparaison de l'autre paire de minuties (E-E') est comparé avec l'angle de minutie de la minutie de référence de l'autre paire de minuties (E-E').

6. Procédé selon la revendication 5, **caractérisé en ce que**, lors de l'identification de l'autre paire de minuties (E-E'), les angles de minutie sont tout d'abord comparés, et l'identification est abandonnée si ces derniers ne se situent pas dans une plage de tolérance donnée.

7. Procédé selon la revendication 6 avec 3, **caractérisé en ce que**, après la comparaison des angles de minutie des minuties de l'autre paire de minuties (E-E'), les distances des minuties de l'autre paire de minuties (E-E') sont comparées, et l'identification est abandonnée si ces dernières ne se situent pas dans des plages de tolérance données.

8. Procédé selon la revendication 6 ou 7, **caractérisé en ce que**, lors d'un abandon de l'identification de l'autre paire de minuties (E-E'), cette identification est effectuée à nouveau avec une autre minutie de comparaison et/ou avec une autre minutie de référence.

9. Procédé selon une des revendications de 1 à 8, **caractérisé en ce que** les minuties de comparaison sont triées à l'aide de leur angle de minutie avant que la comparaison avec des minuties de référence ait lieu.

10. Procédé selon une des revendications de 1 à 9, **caractérisé en ce que** l'empreinte digitale de comparaison de la personne est appréciée dès qu'aucune autre paire de minuties (E-E') ne peut être identifiée.

11. Procédé selon une des revendications de 1 à 10, **caractérisé en ce que**, lors de l'identification de l'autre paire de minuties (E-E'), des angles et/ou des distances de minuties de référence ne sont calculés que quand ils deviennent nécessaires pour la comparaison avec des angles et/ou des distances des minuties de comparaison correspondantes.

12. Procédé selon la revendication 11, **caractérisé en ce que** des angles et distances calculés sont mémorisés pour d'autres comparaisons.

**13.** Procédé selon une des revendications de 1 à 12, **caractérisé en ce que** l'ordre des minuties de référence à prendre en compte lors de l'identification des paire de lignes de base et d'autres paires de minuties (E-E') est déterminé par une séquence de minuties de référence donnée.

**14.** Procédé selon la revendication 13, **caractérisé en ce que**, si aucune paire de minuties (E-E') ne peut être identifiée dans l'ordre déterminé par la séquence de minuties de référence pour une minutie de référence, l'opération est poursuivie avec la minutie de référence suivante de la séquence.

**15.** Procédé selon la revendication 13 ou 14, **caractérisé en ce que**, lors de la constitution de la paire de lignes de base (A-B, A'-B'), seules des minuties de référence se suivant directement dans la séquence de minuties de référence sont prises en compte.

**16.** Procédé de mise à disposition de minuties de référence d'une empreinte digitale de référence pour la vérification biométrique d'une empreinte digitale de comparaison d'une personne à l'aide des minuties de référence selon une des revendications précédentes, **caractérisé en ce qu'**une séquence de minuties de référence est identifiée à l'aide de critères donnés à partir des minuties de référence extraites et est mise à disposition en même temps que les minuties de référence.

**17.** Procédé selon la revendication 16, **caractérisé en ce que** la séquence de minuties de référence prescrit l'ordre dans lequel des minuties de comparaison de l'empreinte digitale de comparaison correspondant aux minuties de référence sont identifiées lors de la vérification de l'empreinte digitale de comparaison.

**18.** Procédé selon la revendication 16 ou 17, **caractérisé en ce que** la séquence de minuties de référence est identifiée à l'aide d'angles de minuties des minuties de référence.

**19.** Carte à puce (10) destinée à la vérification biométrique d'une empreinte digitale de comparaison (23) d'une personne à l'aide d'une empreinte digitale de référence, comprenant une mémoire, une processeur (14) et un module de biométrie (17) exécutable par le processeur (14) pour la comparaison de minuties de comparaison de l'empreinte digitale de comparaison (23) avec des minuties de référence (19) de l'empreinte digitale de référence,

- la mémoire étant configurée pour mémoriser les minuties de référence (19) de l'empreinte digitale de référence ; et
- le module de biométrie (17) étant configuré pour identifier une paire de lignes de base, au moins une troisième paire de minuties et autant d'autres paires de minuties que possible et pour apprécier l'empreinte digitale de comparaison (23) de la personne à l'aide des paires de minuties identifiées, la paire de lignes de base comprenant deux paires de minuties respectivement formées de minuties de comparaison et minuties de référence (19) correspondant entre elles et la troisième paire de minuties comprenant une minutie de comparaison et une minutie de référence (19) correspondante ;

**caractérisée en ce que** :
le module de biométrie (19) est en outre configuré pour :

- définir à partir des paires de minuties identifiées une chaîne commençant par la paire de lignes de base ;
- prolonger la chaîne de chaque paire de minuties identifiée, la chaîne comprenant au moins trois paires de minuties identifiées et l'ordre des paires de minuties identifiées étant fixée de manière inchangeable dans la chaîne,
- déterminer trois paires de minuties de repère dans la chaîne de toutes les paires de minuties déjà identifiées ;
- identifier une autre paire de minuties à l'aide des trois paires de minuties de repère déterminées, par comparaison de relations géométriques entre une minutie de référence choisie et les minuties de référence des trois paires de minuties de repère avec des relations géométriques d'une minutie de comparaison choisie et des minuties de comparaison des trois paires de minuties de repère ; et

la mémoire est en outre configurée pour mettre en mémoire la chaîne des paires de minuties identifiés.

**20.** Carte à puce (10) selon la revendication 19, **caractérisée en ce que** c'est une mémoire non volatile (12) et/ou une mémoire rémanente (11) qui est utilisée en tant que mémoire.

**21.** Carte à puce (10) selon la revendication 19 ou 20, **caractérisée en ce que** le module de biométrie (17) est intégré dans un système d'exploitation (16) appartenant à la carte à puce (10) et résidant dans une mémoire rémanente (11), ou bien se trouve dans une mémoire non volatile (12) ou est réalisé sous forme d'un coprocesseur biométrique.

22. Carte à puce (10) selon une des revendications de 19 à 21, **caractérisée en ce que** le module de biométrie (17) est configuré pour déterminer en tant que paires de minuties de repère les paires de minuties se trouvant en première, en avant-dernière et en dernière position de la chaîne.

23. Carte à puce (10) selon une des revendications de 19 à 22, **caractérisée en ce que** le module de biométrie (17) est configuré pour, lors de l'identification de l'autre paire de minuties, faire entrer dans les relations les distances des minuties de l'autre paire de minuties par rapport aux minuties correspondantes des paires de minuties de repère.

24. Carte à puce (10) selon une des revendications de 19 à 23, **caractérisée en ce que** le module de biométrie (17) est configuré pour, lors de l'identification de l'autre paire de minuties, faire entrer dans les relations les angles inclus par les minuties de l'autre paire de minuties et par les minuties correspondantes de la dernière et de l'avant-dernière paire de minuties de la chaîne.

25. Carte à puce (10) selon une des revendications de 19 à 24, **caractérisée en ce que** le module de biométrie (17) est configuré pour, lors de l'identification de l'autre paire de minuties, comparer l'angle de minutie de la minutie de comparaison de l'autre paire de minuties avec l'angle de minutie de la minutie de référence (19) de l'autre paire de minuties.

26. Carte à puce (10) selon la revendication 25, **caractérisée en ce que** le module de biométrie (17) est configuré pour, lors de l'identification de l'autre paire de minuties, comparer tout d'abord les angles de minutie et abandonner l'identification si ces derniers ne se situent pas dans une plage de tolérance donnée.

27. Carte à puce (10) selon la revendication 26 avec 23, **caractérisée en ce que** le module de biométrie (17) est configuré pour, après la comparaison des angles de minutie des minuties de l'autre paire de minuties, comparer les distances des minuties de l'autre paire de minuties et abandonner l'identification si ces dernières ne se situent pas dans des plages de tolérance données.

28. Carte à puce (10) selon la revendication 26 ou 27, **caractérisée en ce que** le module de biométrie (17) est configuré pour, lors d'un abandon de l'identification de l'autre paire de minuties, effectuer à nouveau cette identification avec une autre minutie de comparaison et/ou avec une autre minutie de référence (19).

29. Carte à puce (10) selon une des revendications de 25 à 27, **caractérisée en ce que** le module de biométrie (17) est configuré pour trier les minuties de comparaison à l'aide de leur angle de minutie avant que la comparaison avec des minuties de référence (19) ait lieu, et **en ce que** la carte à puce comprend une mémoire non volatile (12) configurée pour mémoriser ce tri des minuties de comparaison.

30. Carte à puce (10) selon une des revendications de 19 à 29, **caractérisée en ce que** le module de biométrie (17) est configuré pour apprécier l'empreinte digitale de comparaison (23) de la personne dès qu'aucune autre paire de minuties ne peut être identifiée.

31. Carte à puce (10) selon une des revendications de 19 à 30, **caractérisée en ce que** le module de biométrie (17) est configuré pour, lors de l'identification de l'autre paire de minuties, ne calculer des angles et/ou des distances des minuties de référence (19) que quand ils deviennent nécessaires pour la comparaison avec des angles et/ou des distances des minuties de comparaison correspondantes.

32. Carte à puce (10) selon la revendication 31, **caractérisée en ce que** le module de biométrie (17) est configuré pour mettre en mémoire les angles et distances calculés aux fins d'autres comparaisons dans une mémoire non volatile (12).

33. Carte à puce (10) selon une des revendications de 19 à 32, **caractérisée en ce que** la mémoire est configurée pour mémoriser en plus des minuties de référence (19) une séquence donnée de minuties de référence, et **en ce que** le module de biométrie (17) est configuré pour, lors de l'identification des paire de lignes de base et des autres paires de minuties, prendre en compte les minuties de référence (19) dans l'ordre donné par la séquence de minuties de référence.

**34.** Carte à puce (10) selon la revendication 33, **caractérisée en ce que** le module de biométrie (17) est configuré pour poursuivre l'opération avec la minutie de référence (19) suivante de la séquence si aucune paire de minuties ne peut être identifiée dans l'ordre déterminé par la séquence de minuties de référence pour une minutie de référence (19).

**35.** Carte à puce (10) selon la revendication 33 ou 34, **caractérisée en ce que** le module de biométrie (17) est configuré pour, lors de l'identification de la paire de lignes de base, ne prendre en compte que des minuties de référence (19) qui se suivent directement dans la séquence de minuties de référence.

**36.** Carte à puce (10) selon une des revendications de 19 à 25, **caractérisée en ce que** la carte à puce (10) comprend une interface de communication de données (15) par l'intermédiaire de laquelle l'empreinte digitale de comparaison (23) est reçue.

**37.** Programme d'ordinateur, **caractérisée en ce qu'**il réalise un procédé selon une des revendications de 1 à 18.

**38.** Système de vérification biométrique d'une empreinte digitale de comparaison (23) d'une personne à l'aide d'une empreinte digitale de référence, **caractérisé par** une carte à puce (10) selon une des revendications de 19 à 36 et un dispositif de vérification (20), le dispositif de vérification (20) comportant un senseur (21) qui est configuré pour enregistrer l'empreinte digitale de comparaison (23) de la personne

**39.** Système selon la revendication 39, **caractérisée en ce que** le dispositif de vérification (20) comporte une interface de communication de données (22) qui est configurée pour correspondre avec l'interface de communication de données (15) de carte à puce (10) et pour transmettre l'empreinte digitale de comparaison (23) à la carte à puce (10).

## FIG 1

## FIG 2

Referenztemplate

Vergleichstemplate

FIG 3

FIG 4

Referenztemplate          Vergleichstemplate

# FIG.5

```
Berechne thresLänge
          ↓
maxKettenLänge = 1
          ↓
  Suche nächstes
    Baselinepaar
          ↓
  ⟨Baselinepaar        ja
    gefunden?⟩ ────────→
          │ nein
          ↓
```

```
        Kettenlänge = 2
               ↓
  Kette [0] = 1. Minutienpaar
      des Baselinepaares
               ↓
  Kette [1] = 2. Minutienpaar
      des Baselinepaares
               ↓
      Suche nächstes
  Minutienpaar für die Kette
               ↓
   nein ⟨Minutienpaar⟩  ja
  ←────── gefunden? ──────→
          │                    │
          ↓                    ↓
  maxKettenlänge =      Kette [Kettenlänge] =
  max (maxKettenlänge,   aktuell gefundenes
      Kettenlänge)          Minutienpaar
          │                    ↓
          ↓              Kettenlänge =
    nein ⟨maxKettenLänge⟩  Kettenlänge + 1
  ←────── >=thresLänge?⟩
               │ ja
               ↘ Early Exit
```

```
  Berechne Score aus
  maxKettenlänge und
Größe der beiden Templ.
          ↓
```

## FIG 6

## FIG 7

**IN DER BESCHREIBUNG AUFGEFÜHRTE DOKUMENTE**

**In der Beschreibung aufgeführte Patentdokumente**

- US 20030044052 A1